# FASCICULE DE BREVET EUROPEEN

(11) **EP 2 379 346 B1**
(45) Date de publication et mention de la délivrance du brevet: **25.02.2015**
(21) Numéro de dépôt: 09767988.0
(22) Date de dépôt: 10.12.2009
(51) Int. Cl.: B60C 9/18

(54) **BANDAGE PNEUMATIQUE DONT LA ZONE SOMMET EST POURVUE D'UNE SOUS-COUCHE REDUISANT LE BRUIT DE ROULAGE**
REIFENPROFIL, DESSEN LAUFFLÄCHENBEREICH MIT EINER STRASSENLÄRM VERMINDERNDEN DÄMPFUNGSUNTERSCHICHT VERSEHEN IST
TYRE TREAD, THE CROWN REGION OF WHICH IS PROVIDED WITH A CUSHIONING SUBLAYER THAT REDUCES ROAD NOISE

(30) Priorité: 17.12.2008 FR 0858716
(43) Date de publication de la demande: 26.10.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: PAGANO, Salvatore, 102-8176 Tokyo (JP); TANAKA, Mitsue, 102-8176 Tokyo (JP)
(74) Mandataire: Ribière, Joel
(86) Numéro de dépôt international: PCT/EP2009/008832
(87) Numéro de publication internationale: WO 2010/069510

(56) Documents cités:
- WO-A-2008/139762
- FR-A- 1 399 709
- JP-A- 2 170 841
- JP-A- 11 334 316
- US-B2- 6 734 245

## Description

L'invention est relative aux pneumatiques pour véhicules automobiles ainsi qu'aux compositions caoutchouteuses utilisables pour la fabrication de tels pneumatiques.

Elle est plus particulièrement relative aux compositions caoutchouteuses utilisées, dans le sommet ("*crown"*) des pneumatiques à armature de carcasse radiale, pour réduire le bruit émis par ces pneumatiques lors du roulage.

Il est connu que le bruit émis par un pneumatique en roulage a pour origine entre autres les vibrations de sa structure consécutives au contact du pneumatique avec les irrégularités de la chaussée, provoquant également une génération d'ondes acoustiques diverses. Le tout se manifeste finalement sous forme de bruit, tant a l'intérieur qu'à l'extérieur du véhicule. L'amplitude des ces différentes manifestations est tributaire des modes de vibrations propres du pneumatique mais également de la nature du revêtement sur lequel le véhicule se déplace. La gamme de fréquences correspondant au bruit généré par les pneumatiques s'étend typiquement de 20 à 4 000 Hz environ.

En ce qui concerne le bruit perçu à l'intérieur du véhicule, deux modes de propagation du son coexistent :
- les vibrations sont transmises par le centre roue, le système de suspension, la transmission pour finalement générer du bruit dans l'habitacle ; on parle alors de transmission par voie solidienne, généralement dominante pour les basses fréquences du spectre (jusqu'à environ 400 Hz) ;
- les ondes acoustiques émises par le pneumatique sont directement propagées par voie aérienne à l'intérieur du véhicule, ce dernier faisant office de filtre ; on parle alors de transmission par voie aérienne, qui domine généralement dans les hautes fréquences (environ 600 Hz et au delà).

Le bruit dit *"road noise"* fait plutôt référence au niveau global perçu dans le véhicule et dans une gamme de fréquence allant jusqu'à 2000 Hz. Le bruit dit "de cavité" fait référence à la gêne due à la résonance de la cavité de gonflage de l'enveloppe du pneumatique.

En ce qui concerne le bruit émis à l'extérieur du véhicule, sont pertinentes les diverses interactions entre le pneumatique et le revêtement routier, le pneumatique et l'air, qui vont occasionner une gêne auprès des riverains du véhicule lorsque ce dernier roule sur une chaussée. On distingue également dans ce cas plusieurs sources de bruit telles que le bruit dit "d'indentation" du à l'impact des rugosités de la route dans l'aire de contact, le bruit dit "de friction" essentiellement généré en sortie de l'aire de contact, le bruit "dit de sculpture" du à l'arrangement des éléments de sculpture et à la résonance dans les différents sillons. La gamme de fréquences concernées correspond ici typiquement à une plage allant de 300 à 3 000 Hz environ.

Or, les Demanderesses ont découvert lors de leurs recherches une composition de caoutchouc spécifique qui, incorporée à la structure interne des pneumatiques, possède des propriétés de barrière au son améliorées dans une plage de fréquence située entre 500 et 2000 Hz, et qui est donc susceptible de contribuer à réduire les bruits émis tant à l'intérieur qu'à l'extérieur des véhicules lors du roulage de leurs pneumatiques.

En conséquence, un premier objet de l'invention concerne un pneumatique radial pour véhicule automobile, tel qu'énoncé à la revendication 1.

L'état de la technique est constitué notamment par les documents D1 (JP02-170841) et D2 (JP11-334316) cités dans le rapport de recherche international.

D1 décrit l'utilisation de particules métalliques dans une partie de la bande de roulement qui est destinée à entrer au contact très vite avec le sol, afin d'améliorer l'adhérence sur glace ou neige. Dans la présente invention, la sous-couche est par définition une partie interne du pneumatique, à l'état neuf comme à l'état usé, non destinée à entrer au contact avec la route, contrairement au cas de D1.

D2 enseigne certes une véritable sous-couche, mais l'utilisation dans cette sous-couche de 8 à 25 pce de fibres courtes métalliques, ceci comme nappe de protection contre les coupures. D2 ne suggère en rien des taux aussi élevés que ceux de la présente invention, supérieurs à 50 pce, ni l'emploi de particules sous forme de poudre, dans un but par ailleurs complètement différent qui est, dans le cas de la présente invention, celui de réduire les bruits de roulage.

Selon un premier mode préférentiel de l'invention, cette sous-couche élastomère réduisant le bruit est interne à la bande de roulement, constituant la partie communément appelée « base » d'une bande de roulement à structure dite "*cap*-*base*". Dans ce cas, la sous-couche ou base est bien entendu une partie non sculptée c'est-à-dire non destinée à entrer au contact de la route lors du roulage du pneumatique, contrairement à la partie radialement externe destinée à entrer au contact de la route et donc par définition sculptée.

Selon un autre mode préférentiel de l'invention, la sous-couche réduisant le bruit est externe (i.e., n'appartient pas) à la bande de roulement, disposée entre la bande de roulement et la ceinture.

Dans tous les cas et quel que soit le mode de réalisation préférentiel de l'invention, la sous-couche est donc une partie interne du pneumatique de l'invention, non visible de l'extérieur dudit pneumatique, en d'autres termes sans contact avec l'air ni un gaz de gonflage.

Les pneumatiques de l'invention sont particulièrement destinés à équiper des véhicules à moteur de type tourisme, incluant les véhicules 4x4 (à quatre roues motrices) et véhicules SUV (*"Sport Utility Vehicles*"), des véhicules deux roues (notamment motos) comme des véhicules industriels choisis en particulier parmi camionnettes et "poids-lourd" (i.e., métro, bus, engins de transport routier tels que camions, tracteurs, remorques, véhicules hors-la-route tels qu'engins agricoles ou de génie civil).

L'invention concerne les pneumatiques ci-dessus tant à l'état cru (i.e., avant cuisson) qu'à l'état cuit (i.e., après réticulation ou vulcanisation).

L'invention concerne également l'utilisation comme couche réduisant le bruit, dans un pneumatique, d'une sous-couche élastomère dont la formulation est telle que définie ci-dessus.

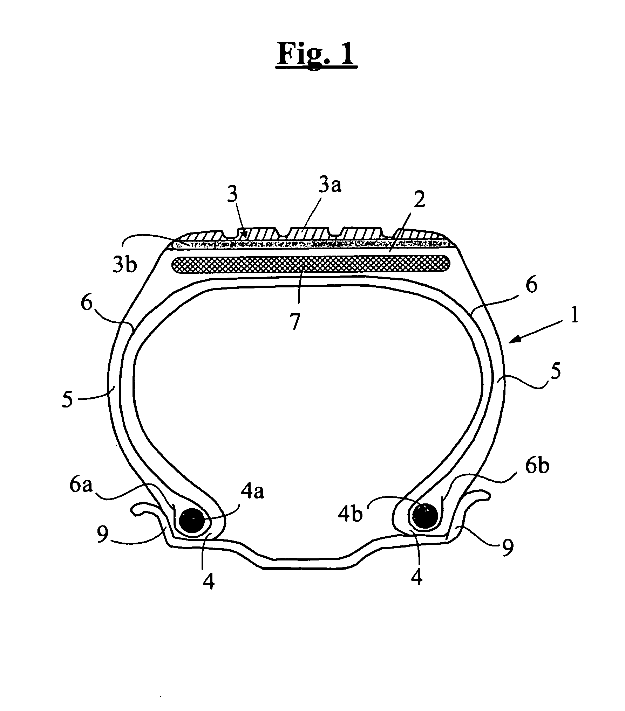

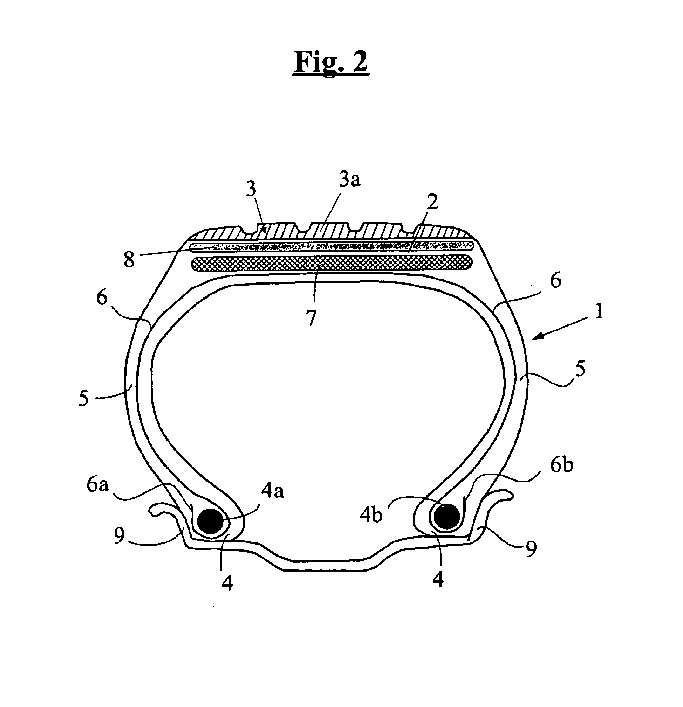

L'invention ainsi que ses avantages seront aisément compris à la lumière de la description et des exemples de réalisation qui suivent, ainsi que des figures 1 et 2 relatives à ces exemples qui schématisent, en coupe radiale, deux exemples de pneumatiques radiaux conformes à l'invention.

### I - DEFINITIONS

Dans la présente demande, on entend de manière connue par :
- "axiale", une direction parallèle à l'axe de rotation du pneumatique ; cette direction peut être "axialement intérieure" lorsqu'elle est dirigée vers l'intérieur du pneumatique et "axialement extérieure" lorsqu'elle est dirigée vers l'extérieur du pneumatique ;
- "bourrelet", la portion essentiellement inextensible du pneumatique adjacente radialement intérieurement au flanc et dont la base est destinée à être montée sur un siège de jante d'une roue de véhicule ;
- élastomère (ou indistinctement caoutchouc) "diénique", un élastomère issu au moins en partie (c'est-à-dire un homopolymère ou un copolymère) de monomère(s) diène(s) (i.e., porteur(s) de deux doubles liaisons carbone-carbone, conjuguées ou non) ;
- "flanc", la portion du pneumatique, le plus souvent de faible rigidité de flexion, située entre le sommet et le bourrelet ;
- "module sécant en extension" (noté E10), le module en traction mesuré en seconde élongation (i.e., après un cycle d'accommodation) à 10% d'allongement (selon ASTM D412 1998 ; éprouvette "C"), ce module étant le module sécant "vrai" c'est-à-dire ramené à la section réelle de l'éprouvette (conditions normales de température et d'hygrométrie selon la norme ASTM D 1349 de 1999) ;
- "pce", parties en poids pour cent parties d'élastomère ou caoutchouc (du total des élastomères si plusieurs élastomères sont présents) ;
- "radiale", une direction passant par l'axe de rotation du pneumatique et normale à celui-ci ; cette direction peut être "radialement intérieure (ou interne)" ou "radialement extérieure (ou externe)" selon qu'elle se dirige vers l'axe de rotation du pneumatique ou vers l'extérieur du pneumatique ;
- "renfort" ou "élément de renforcement", aussi bien des monofilaments que des multifilaments, ou des assemblages comme des câbles, des retors ou bien encore n'importe quel type d'assemblage équivalent, et ceci, quels que soient la matière et le traitement de ces renforts, par exemple traitement de surface ou enrobage tel que gommage, ou encore pré-encollage pour favoriser l'adhésion sur le caoutchouc ;
- "renfort orienté circonférentiellement" ou "renfort circonférentiel", un renfort orienté sensiblement parallèlement à la direction circonférentielle du pneumatique, c'est-à-dire faisant avec cette direction un angle ne s'écartant pas de plus de cinq degrés de la direction circonférentielle ;
- "renfort orienté radialement" ou "renfort radial", un renfort contenu sensiblement dans un même plan axial ou dans un plan faisant avec un plan axial un angle inférieur ou égal à 10 degrés.

D'autre part, dans la présente description et sauf indication expresse différente, tous les pourcentages (%) indiqués sont des % en masse ; de même, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

### II - RESCRIPTION DETAILLEE DE L'INVENTION

Le pneumatique de l'invention a donc pour caractéristique essentielle d'être pourvu d'une sous-couche ou base réduisant le bruit, comportant une composition de caoutchouc qui comporte au moins un élastomère diénique, à titre de charge haute densité plus de 50 pce sous forme de poudre de particules à masse volumique supérieure à 4 g/cm³, optionnellement une charge renforçante et autres additifs éventuels qui vont être décrits en détail ci-après.

### II-1. - Formulation de la sous-couche élastomère

### II-1-A. Elastomère diénique

Les élastomères diéniques peuvent être classés de manière connue en deux catégories : ceux dits "essentiellement insaturés" et ceux dits "essentiellement saturés". Par exemple, les caoutchoucs butyl, les copolymères de diènes et d'alpha-oléfines type EPDM entrent dans la catégorie des élastomères diéniques essentiellement saturés, ayant un taux de motifs d'origine diénique qui est faible ou très faible, toujours inférieur à 15% (% en moles). A contrario, par élastomère diénique essentiellement insaturé, on entend un élastomère diénique issu au moins en partie de monomères diènes conjugués, ayant un taux de motifs ou unités d'origine diénique (diènes conjugués) qui est supérieur à 15% (% en moles). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

On préfère utiliser au moins un élastomère diénique du type fortement insaturé, en particulier un élastomère diénique choisi dans le groupe constitué par les polybutadiènes (BR) (notamment ceux ayant un taux de liaisons cis-1,4 supérieur à 90%), les polyisoprènes de synthèse (IR), le caoutchouc naturel (NR), les copolymères de butadiène, les copolymères d'isoprène (autres que IIR) et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans US 6 013 718), des groupes alkoxysilanes (tels que décrits par exemple dans US 5 977 238), des groupes carboxyliques (tels que décrits par exemple dans US 6 815 473 ou US 2006/0089445) ou encore des groupes polyéthers (tels que décrits par exemple dans US 6 503 973). A titre d'autres exemples de tels élastomères fonctionnalisés, on peut citer également des élastomères (tels que SBR, BR, NR ou IR) du type époxydés.

Selon un mode de réalisation particulièrement préférentiel de l'invention, l'élastomère diénique est choisi dans le groupe constitué par le caoutchouc naturel, les polyisoprènes de synthèse, les polybutadiènes ayant un taux de liaisons cis-1,4 supérieur à 90%, les copolymères de butadiène-styrène et les mélanges de ces élastomères.

A titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse ("Tg" - mesurée selon ASTM D3418-82) de -80°C à -40°C, les copolymères isoprène-styrène et notamment ceux ayant une teneur en styrène comprise entre 5% et 50% en poids et une Tg comprise entre -50°C et -10°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie , butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

Selon un mode de réalisation particulier et préférentiel de l'invention, la sous-couche élastomère comporte, à titre d'élastomère diénique, au moins 40 pce, plus préférentiellement au moins 50 pce (pour rappel, "pce" signifiant parties en poids pour cent parties d'élastomère) de caoutchouc naturel ou polyisoprène de synthèse, ce dernier pouvant être combiné ou non à un second élastomère diénique, en particulier un copolymère SBR (SBR solution ou émulsion) ou un polybutadiène ayant un taux de liaisons cis-1,4 qui est de préférence supérieur à 90%.

Selon un autre mode de réalisation plus particulier et préférentiel, la sous-couche comporte, à titre d'élastomère diénique, de 40 à 80 pce (plus préférentiellement de 50 à 80 pce) de caoutchouc naturel ou polyisoprène de synthèse, avec 20 à 60 pce (de préférence 20 à 50 pce) d'un copolymère SBR ou d'un polybutadiène ayant un taux de liaisons cis-1,4 qui est de préférence supérieur à 90%, plus préférentiellement encore supérieur à 95%.

Selon un autre mode de réalisation particulier et préférentiel de l'invention, la sous-couche comporte, à titre d'élastomère diénique, au moins 40 pce, plus préférentiellement au moins 50 pce, d'un polybutadiène (BR) ayant un taux de liaisons cis-1,4 supérieur à 90%, plus préférentiellement encore supérieur à 95%. Plus préférentiellement, ledit polybutadiène est alors utilisé en coupage avec du caoutchouc naturel ou un polyisoprène de synthèse.

Selon un autre mode de réalisation particulier et préférentiel, l'élastomère diénique utilisé est un coupage (mélange) ternaire de NR (ou IR), BR et SBR. De préférence, dans le cas de tels coupages, la composition comporte de 40 à 80 pce de NR (ou IR) et de 20 à 60 pce de BR et SBR.

Aux élastomères diéniques des bandes de roulement selon l'invention pourraient être associés, en quantité minoritaire, des élastomères synthétiques autre que diéniques, voire des polymères autres que des élastomères, par exemple des polymères thermoplastiques.

### II-1-B. Charge haute densité

La sous-couche élastomère du pneumatique de l'invention a pour caractéristique essentielle de comporter plus de 50 pce, de préférence entre 50 et 600 pce, d'une charge à haute densité, dont la densité ou masse volumique des particules est supérieure à 4 g/cm³, de préférence supérieure à 4,5 g/cm³, plus préférentiellement encore supérieure à 5 g/cm³.

De telles charges haute densité sont bien connues de l'homme du métier des pneumatiques, elles ont été essentiellement utilisées jusqu'ici dans des bandes de roulement de pneumatiques, en remplacement ou complément de charges conventionnelles moins denses telles que silice ou noir de carbone, pour tenter d'améliorer certaines de leurs propriétés d'usage ou compromis de propriétés telles que par exemple résistance au roulement, résistance à l'usure ou adhérence (voir notamment brevets US 6 734 245 et US 6 838 495).

La charge haute densité utilisée peut se présenter sous forme de particules isométriques ou anisométriques. Elle est préférentiellement de taille micrométrique, c'est-à-dire qu'elle se présente sous la forme de "microparticules" dont la taille est par définition supérieure au micromètre. Préférentiellement, ces microparticules possèdent un diamètre médian (ou une taille médiane si les particules ne sont pas essentiellement sphériques), noté ci-après "D", qui est compris entre 1 et 500 µm ; plus préférentiellement, le diamètre médian D des particules est compris entre 2 et 400 µm, en particulier entre 2 et 200 µm.

La charge haute densité se présente sous forme de poudre. Selon un autre mode de réalisation préférentiel (qu'elle soit sous forme de poudre ou non), elle se présente sous la forme de particules pleines, mais des particules ou billes creuses à haute densité pourraient être également utilisées.

Le taux de charge haute densité est plus préférentiellement compris entre 50 et 500 pce. En dessous du minimum indiqué, l'effet technique visé est insuffisant alors qu'au-delà du maximum préconisé, on risque de s'exposer à des problèmes d'augmentation du module, de fragilisation de la composition, ainsi qu'à des difficultés de dispersion de la charge et de processabilité, sans parler d'une pénalisation notable de l'hystérèse. Pour toutes ces raisons, ce taux est plus particulièrement compris dans un domaine de 70 à 400 pce, tout particulièrement dans un domaine de 90 à 350 pce.

La charge haute densité est préférentiellement métallique (i.e., à base de métal ou d'un dérivé métallique) ; elle est constituée préférentiellement par des métaux tels que des métaux alcalino-terreux, métaux de transition ou terres rares, ou encore par des dérivés de tels métaux tels que par exemple sulfates, carbonates, sulfures, oxydes et/ou hydroxydes, particulièrement par des oxydes de tels métaux.

Dans le cas des métaux alcalino-terreux on citera en particulier le Baryum et le Strontium. Dans le cas des métaux de transition on citera en particulier le Fer, le Cuivre, l'Etain, le Zinc, le Molybdène, l'Argent, le Niobium, le Tungstène, le Rhénium, le Tantale, l'Hafnium, le Bismuth et le Manganèse. Enfin, dans le cas des terres rares, on citera en particulier le Lanthane, le Néodyme, le Cérium ou le Samarium.

Plus préférentiellement, le métal de la charge haute densité, qu'il se présente sous forme de métal ou d'un dérivé métallique tel qu'un oxyde, est choisi dans le groupe constitué par le Fer, le Cuivre, l'Etain, le Zinc, le Tungstène, le Bismuth, le Cérium, le Néodyme et les mélanges de ces métaux.

Ces métaux et/ou dérivés de métaux, particulièrement oxydes métalliques, sont choisis préférentiellement parmi ceux dont la masse volumique est supérieure à 5 g/cm³. A titre d'exemples d'oxydes métalliques particulièrement préférentiels peuvent être cités notamment ceux choisis dans le groupe constitué par Fe₂O₃ (densité 5,1 g/cm³), ZnO (5,7 g/cm³), CuO (6,3 /cm³), SnO₂ (7,0 g/cm³), WO₃ (7,2 g/cm³), CeO₂ (7,3 g/cm³), Nd₂O₃ (7,2 g/cm³), Bi₂O₃ (8,9 g/cm³) et les mélanges de tels oxydes.

Ces oxydes métalliques sont bien connus et disponibles commercialement, par exemple auprès des sociétés Nakalai Tesque Inc, Toho Zinc Co, Nihon Kagaku Sangyo Co, Kanto Kagaku, Taiyo Koko Co, American Elements.

L'introduction de la charge haute densité dans la composition élastomère peut être réalisée selon divers procédés connus, par exemple par mélangeage en solution, par mélangeage en masse dans un mélangeur interne, ou encore par mélangeage par extrusion.

Pour l'analyse de la granulométrie et le calcul du diamètre médian des particules, notamment microparticules, de la charge haute densité, différentes méthodes connues sont applicables, par exemple par diffraction laser (par exemple selon norme ISO-8130-13 ou norme JIS K5600-9-3) ; on peut aussi utiliser de manière simple une analyse de la granulométrie par un tamisage mécanique à travers des tamis de diamètres différents. Le diamètre médian (ou taille médiane) est finalement calculé de manière bien connue à partir de l'histogramme de la distribution granulométrique.

### II-1-C. Charge renforçante

La sous-couche élastomère peut également comporter une charge dite renforçante, connue pour ses capacités à renforcer une composition de caoutchouc utilisable pour la fabrication de pneumatiques, par exemple une charge organique telle que du noir de carbone, ou encore une charge inorganique renforçante telle que de la silice à laquelle est associé de manière connue un agent de couplage.

De manière bien connue de l'homme du métier, une telle charge renforçante consiste préférentiellement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

La masse volumique de cette charge renforçante est généralement inférieure à 3 g/cm³, en particulier inférieure à 2,5 g/cm³.

De manière préférentielle, le taux de charge renforçante totale (en particulier de la silice ou du noir de carbone ou un mélange de silice et de noir de carbone) est compris entre 0 et 100 pce. Au-delà de 100 pce, il existe un risque d'augmentation de l'hystérèse et donc de la résistance au roulement des pneumatiques. Pour cette raison, le taux de charge renforçante totale est plus préférentiellement compris entre 2 et 50 pce.

Comme noirs de carbone conviennent tous les noirs de carbone conventionnellement utilisés dans les pneumatiques ou leurs bandes de roulement (noirs dits de grade pneumatique). Parmi ces derniers, on citera plus particulièrement les noirs de carbone renforçants des séries 100, 200, 300, ou des noirs des séries 500, 600 ou 700 (grades ASTM), comme par exemple les noirs N115, N134, N234, N326, N330, N339, N347, N375, N550, N683, N772. Les noirs de carbone pourraient être par exemple déjà incorporés à l'élastomère diénique, notamment isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu ici toute charge inorganique ou minérale, quelles que soient sa couleur et son origine (naturelle ou de synthèse), encore appelée charge "blanche", charge "claire" ou parfois charge "non-noire" par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, en particulier de la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber.

Pour coupler la charge inorganique renforçante à l'élastomère diénique, on utilise de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (I) suivante:

(I) Z - A - Sₓ - A - Z , d

ans laquelle:
- x est un entier de 2 à 8 (de préférence de 2 à 5) ;
- les symboles A, identiques ou différents, représentent un radical hydrocarboné divalent (de préférence un groupement alkylène en C₁-C₁₈ ou un groupement arylène en C₆-C₁₂, plus particulièrement un alkylène en C₁-C₁₀, notamment en C₁-C₄, en particulier le propylène) ;
- les symboles Z, identiques ou différents, répondent à l'une des trois formules ci-après: 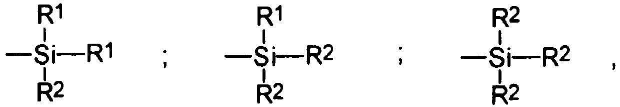 dans lesquelles:
- les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
- les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 précitée (ou US 7 217 751).

A titre d'exemple d'agents de couplage autres qu'un alkoxysilane polysulfuré, on citera notamment des POS (polyorganosiloxanes) bifonctionnels ou encore des polysulfures d'hydroxysilane (R² = OH dans la formule I ci-dessus) tels que décrits par exemple dans les demandes de brevet WO 02/30939 (ou US 6 774 255), WO 02/31041 (ou US 2004/051210), et WO2007/061550, ou encore des silanes ou POS porteurs de groupements fonctionnels azo-dicarbonyle, tels que décrits par exemple dans les demandes de brevet WO 2006/125532, WO 2006/125533, WO 2006/125534.

A titre d'exemples d'autres silanes sulfurés, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US 6 849 754, WO 99/09036, WO 2006/023815, WO 2007/098080.

Bien entendu pourraient être également utilisés des mélanges des agents de couplage précédemment décrits, comme décrit notamment dans la demande WO 2006/125534 précitée.

Dans la sous-couche réduisant le bruit, lorsqu'elle est renforcée par une charge inorganique telle que silice, la teneur en agent de couplage est préférentiellement comprise entre 2 et 15 pce, plus préférentiellement entre 3 et 12 pce.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

### II-1-D. Additifs divers

La composition élastomère de la sous-couche réduisant le bruit peut comporter également tout ou partie des additifs usuels habituellement utilisés dans les compositions de caoutchouc pour pneumatiques, notamment celles destinées à la fabrication de bases (*"tread base*") de bandes de roulement à structure *"cap-base",* comme par exemple des agents de protection tels que anti-ozonants chimiques, anti-oxydants, des agents plastifiants ou des huiles d'extension, que ces derniers soient de nature aromatique ou non-aromatique, notamment des huiles très faiblement ou non aromatiques, par exemple du type naphténiques ou paraffiniques, à haute ou de préférence à basse viscosité, des huiles MES ou TDAE, des huiles végétales, des charges autres que celles précitées, par exemple des charges lamellaires (e.g. phyllosilicates tels que kaolin, talc, mica, graphite, argiles ou argiles modifiées (*"organo clays"*)) susceptibles d'améliorer encore l'effet barrière, des résines plastifiantes hydrocarbonées à haute Tg (de préférence supérieure à 30°C), des résines tackifiantes, des résines renforçantes, des accepteurs ou des donneurs de méthylène, un système de réticulation à base soit de soufre, soit de donneurs de soufre et/ou de peroxyde et/ou de bismaléimides, des accélérateurs de vulcanisation, des activateurs de vulcanisation.

La composition élastomère de la sous-couche peut également contenir des activateurs de couplage lorsque qu'un agent de couplage est utilisé, des agents de recouvrement de la charge inorganique lorsqu'une charge inorganique est utilisée, ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur processabilité à l'état cru ; ces agents sont par exemple des hydroxysilanes ou des silanes hydrolysables tels que des alkyl-alkoxysilanes, des polyols, des polyéthers, des amines, des polyorganosiloxanes hydroxylés ou hydrolysables.

### II-2. - Fabrication des compositions

Les compositions de caoutchouc formant la sous-couche sont fabriquées dans des mélangeurs appropriés, en utilisant par exemple deux phases de préparation successives selon une procédure générale bien connue de l'homme du métier : une première phase de travail ou malaxage thermomécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

Un procédé utilisable pour la fabrication de telles compositions de caoutchouc comporte par exemple et de préférence les étapes suivantes :
- incorporer dans un mélangeur, à l'élastomère diénique ou au mélange d'élastomères diéniques, la charge haute densité et l'éventuelle autre charge renforçante, en malaxant thermomécaniquement le tout, en une ou plusieurs fois, jusqu'à atteindre une température maximale comprise entre 130°C et 200°C ;
- refroidir l'ensemble à une température inférieure à 100°C ;
- incorporer ensuite un système de réticulation ;
- malaxer le tout jusqu'à une température maximale inférieure à 120°C ;
- extruder ou calandrer la composition de caoutchouc ainsi obtenue.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de recouvrement ou de mise en oeuvre complémentaires et autres additifs divers, à l'exception du système de réticulation. Après refroidissement du mélange ainsi obtenu au cours de la première phase non-productive, on incorpore alors le système de réticulation à basse température, généralement dans un mélangeur externe tel qu'un mélangeur à cylindres ; le tout est alors mélangé (phase productive) pendant quelques minutes, par exemple entre 5 et 15 min.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productive et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 5 pce, celui de l'accélérateur primaire est de préférence compris entre 0,5 et 8 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont plus préférentiellement choisis dans le groupe constitué par disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable directement comme sous-couche élastomère "anti-bruit", par exemple comme partie *"base"* d'une bande de roulement.

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

De préférence, la sous-couche présente, à l'état vulcanisé (i.e., après cuisson), une densité ou masse volumique qui est supérieure à 1,4 g/cm³, en particulier comprise entre 1,5 et 3,0 g/cm³. Son module sécant en extension (E10) est préférentiellement inférieur à 30 MPa, plus préférentiellement compris entre 3 et 30 MPa, en particulier compris dans un domaine de 4 à 20 MPa.

### II-3. - Pneumatique de l'invention

La composition de caoutchouc précédemment décrite est donc utilisée, dans le pneumatique de l'invention, comme sous-couche élastomère réduisant le bruit, disposée circonférentiellement à l'intérieur du sommet du pneumatique, entre d'une part la partie la plus radialement externe de sa bande de roulement, c'est-à-dire la portion destinée à entrer au contact de la route lors du roulage, et d'autre part la ceinture renforçant ledit sommet.

Il faut donc comprendre que cette sous-couche est disposée :
- soit sous la bande de roulement (c'est-à-dire radialement intérieurement par rapport à cette bande de roulement), entre la bande de roulement et la ceinture ;
- soit dans la bande de roulement elle-même, mais dans ce cas sous la portion (c'est-à-dire radialement intérieurement par rapport à cette portion) de bande de roulement qui est destinée à entrer au contact de la route lors du roulage du pneumatique, tout au long de la durée de vie de ce dernier.

Dans les deux cas, on comprend donc immédiatement que la sous-couche ici décrite est par définition une partie interne du pneumatique de l'invention, située à l'intérieur même de sa structure et non destinée à entrer en contact avec la route ; cette sous-couche ne donne pas sur l'extérieur du pneumatique c'est-à-dire qu'elle est non visible de l'extérieur dudit pneumatique (sans contact avec l'air ni un gaz de gonflage), à l'état neuf comme à l'état usé.

On peut rappeler aussi que, dans le second cas, la bande de roulement est communément appelée par l'homme du métier bande de roulement à structure "*cap-base*"; le terme "*cap*" désigne la portion sculptée de la bande de roulement destinée à entrer au contact de la route et le terme "*base*" désigne la portion non sculptée de la bande de roulement, de formulation différente, qui n'est pas destinée à entrer au contact de la route.

Des bandes de roulement à structure *cap-base* dont la base a été spécifiquement formulée pour réduire le bruit émis par les pneumatiques, par incorporation de caoutchouc mousse ou d'un volume spécifique de charges creuses telles que des billes creuses en verre, ont par exemple été décrites dans les documents brevet US 5 417 267, US 6 216 757 et US 6626216.

Dans le pneumatique conforme à l'invention, l'épaisseur de la sous-couche est de préférence comprise entre 0,5 et 5 mm, notamment dans un domaine de 1 à 3 mm.

Les figures 1 et 2 annexées représentent en coupe radiale, de manière très schématique (notamment sans respect d'une échelle spécifique), deux exemples préférentiels de bandages pneumatiques pour véhicule automobile à armature de carcasse radiale, conformes à l'invention.

La figure 1 illustre un premier mode possible de réalisation de l'invention, selon lequel la sous-couche élastomère (3b) réduisant le bruit est intégrée à la bande de roulement (3) elle-même, et disposée radialement sous la portion (3a) de la bande de roulement (3) qui est destinée à entrer au contact de la route lors du roulage.

Sur cette figure 1, le bandage pneumatique (1) schématisé comporte une zone sommet (2) comprenant une bande de roulement (3) (pour simplifier, comportant une sculpture très simple) dont la partie radialement externe (3a) est destinée à entrer au contact de la route, deux bourrelets inextensibles (4) dans lesquels est ancrée une armature de carcasse (6). Le sommet (2), réuni auxdits bourrelets (4) par deux flancs (5), est de manière connue en soi renforcé par une armature de sommet ou "ceinture" (7) au moins en partie métallique et radialement externe par rapport à l'armature de carcasse (6) traversant cette zone sommet (2), cette ceinture (7) étant par exemple constituée d'au moins deux nappes croisées superposées renforcées par des câbles métalliques.

L'armature de carcasse (6) est ici ancrée dans chaque bourrelet (4) par enroulement autour de deux tringles (4a, 4b), le retournement (6a, 6b) de cette armature (6) étant par exemple disposé vers l'extérieur du pneumatique (1) qui est ici représenté monté sur sa jante (9). L'armature de carcasse (6) est constituée d'au moins une nappe renforcée par des câbles textiles radiaux, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 7). Bien entendu, ce pneumatique (1) comporte en outre de manière connue une couche de gomme ou élastomère intérieure (communément appelée "gomme intérieure " ou " *inner liner* ") qui définit la face radialement interne du pneumatique et qui est destinée à protéger la nappe de carcasse de la diffusion d'air provenant de l'espace intérieur au pneumatique.

Ce pneumatique (1) conforme à l'invention est caractérisé en ce que la partie base (3b) de sa bande de roulement (3) est constituée par la sous-couche qui a été décrite en détail précédemment.

La figure 2 illustre un autre mode possible de réalisation de l'invention, selon lequel la sous-couche (8) réduisant le bruit est externe à la bande de roulement (i.e., distincte de cette dernière), disposée cette fois dans le sommet (2) en dessous de la bande de roulement (i.e., radialement intérieurement par rapport à cette dernière) et au-dessus de la ceinture (i.e., radialement extérieurement par rapport à cette dernière), en d'autres termes entre la bande de roulement (3) et la ceinture (7).

Dans les deux cas schématisés ci-dessus, la sous-couche élastomère offre aux pneumatiques de l'invention des propriétés de barrière au son améliorées, comme cela est démontré dans les tests de roulage des pneumatiques qui suivent.

### II-4. - Tests de roulage

Pour les besoins de cet essai, une composition de caoutchouc (notée ci-après C-1) a été préparée dont la formulation est donnée dans le tableau 1, le taux des différents produits étant exprimés en pce (parties en poids pour cent parties d'élastomère total, constitué ici de 60 pce de NR et 40 pce de BR).

Pour la fabrication de cette composition, on a procédé de la manière suivante: on a introduit dans un mélangeur interne, dont la température initiale de cuve était d'environ 60°C, successivement la charge renforçante (noir de carbone), la charge haute densité (microparticules de CuO), l'élastomère diénique (NR et BR), ainsi que les divers autres ingrédients à l'exception du système de vulcanisation ; le mélangeur était ainsi rempli à environ 70% (% en volume). On a conduit alors un travail thermomécanique (phase non-productive) en une étape d'environ 2 à 4 min, jusqu'à atteindre une température maximale de "tombée" de 165°C. On a récupéré le mélange ainsi obtenu, on l'a refroidit puis on a incorporé du soufre et un accélérateur type sulfénamide sur un mélangeur externe (homo-finisseur) à 30°C, en mélangeant le tout (phase productive) pendant quelques minutes.

La composition ainsi obtenue, de masse volumique égale à environ 1,7 g/cm³, a été ensuite calandrée sous la forme d'une base (sous-couche) d'une bande de roulement du type *cap-base,* puis cette dernière incorporée à un pneumatique pour véhicule tourisme (dimensions 225/55 R17) tel qu'illustré à la figure 1.

Ce pneumatique (noté P-1) conforme à l'invention a été comparé à un pneumatique témoin (noté ci-après P-2) de dimensions et construction identiques pourvu également d'une bande de roulement à structure *cap-base* dont la base comportait cette fois une composition conventionnelle (notée ci-après C-2, de masse volumique 1,1 g/cm³), de même formulation que celle de la composition C-1 mais dépourvue de charge haute densité (poids du pneumatique P-2 inférieur de 300 g à celui du pneumatique P-1) ; en outre, afin de pouvoir comparer l'efficacité anti-bruit des deux couches à isorigidité (c'est-à-dire pour une dureté Shore A identique), la rigidité de la composition C-1 a du être augmentée en utilisant 50 pce de noir de carbone (N550).

Pour caractériser les deux types de pneumatiques et les propriétés de barrière au son de leurs sous-couches respectives, on conduit un test de roulage dans lequel on évalue le niveau sonore émis en mesurant le niveau de pression acoustique près du pneumatique, lors du roulage du véhicule, grâce à des microphones disposés à une distance très proche du pneumatique (méthode connue sous le nom de " Microphone Near Tire " ou MNT). Plus précisément, deux microphones, fixés sur le châssis du véhicule, sont disposés à une distance d'environ 20 cm du pneumatique, l'un à l'entrée de l'aire de contact du pneumatique avec le sol, l'autre à la sortie de cette aire de contact.

Le véhicule utilisé est un véhicule de marque Toyota ("Celsior"). Le revêtement de la chaussée utilisée pour ce test correspond à un asphalte semi rugueux. La vitesse du véhicule est ajustée a 60km/h et lors du passage dans l'aire de mesure, le moteur est coupé (boîte de vitesse mise au point mort) puis l'enregistrement de la pression acoustique est déclenché. Le pneumatique témoin P-2 contenant la composition C-2 à titre de sous-couche est utilisé ici comme pneumatique de référence.

Les résultats du tableau 2 expriment les différences de niveau sonore enregistré entre le pneumatique P-1 conforme à l'invention et le pneumatique témoin P-2, dans un domaine de fréquences explorées de 700 à 1 900 Hz (par pas de 200 Hz). Ces différences sont exprimées en énergie acoustique (dB(A)) qui correspond à l'intégration de la pression acoustique en fonction de la fréquence sur le domaine de fréquences considéré, une valeur négative indiquant une réduction du bruit par rapport à la référence.

A la lecture du tableau 2, on constate de manière inattendue que, quel que soit le domaine particulier de fréquence exploré entre 700 et 1900 Hz, le pneumatique de l'invention émet toujours moins de bruit que le pneumatique témoin, tant à l'entrée qu'à la sortie de l'aire de contact du pneumatique avec la chaussée, une réduction de 0,8 dB(A) par exemple devant être considérée comme tout à fait significative pour l'homme du métier.

Un tel résultat ne peut être attribué bien entendu qu'à la formulation spécifique de la sous-couche du pneumatique de l'invention, particulièrement à la présence de la charge haute densité au taux particulièrement élevé qui est préconisé.

D'autre part, des tests de roulage complémentaires ont démontré que les pneumatiques selon l'invention P-1 présentaient une endurance à haute vitesse, une résistance au roulement ainsi qu'une poussée de dérive qui étaient sensiblement identiques à celles des pneumatiques témoins. Ainsi, grâce à l'invention, il est possible de réduire le bruit émis par les pneumatiques, sans compromettre leurs propriétés d'usage.

**Tableau 1**

| Formulation : | pce |
|---|---|
| NR (1) | 60 |
| BR (2) | 40 |
| noir de carbone (3) | 25 |
| particules haute densité (4) | 115 |
| ZnO | 3 |
| acide stéarique | 0.5 |
| antioxydant (5) | 2 |
| soufre | 3 |
| accélérateur (6) | 1.5 |

| | |
|---|---|
| (1) Caoutchouc naturel (peptisé) ; (2) Polybutadiène avec 4,3% de 1-2 ; 2,7% de trans ; 97% de cis 1-4 (Tg = -104°C) ; (3) Grade ASTM N234 (société Cabot) ; (4) Microparticules de CuO (dénomination "ET" de Nippon Kagaku Sangyo) ; (5) N-1,3-diméthylbutyl-N-phénylparaphénylènediamine (Santoflex 6-PPD de la société Flexsys); (6) N-dicyclohexyl-2-benzothiazol-sulfénamide ("Santocure CBS" de la société Flexsys). | |

**Tableau 2**

| Domaine (Hz) | 700-900 | 900-1100 | 1100-1300 | 1300-1500 | 1500-1700 | 1700-1900 |
|---|---|---|---|---|---|---|
| dB(A) (1) | -0.2 | -0.5 | - 0.8 | -0.3 | - 0.6 | -0.3 |
| dB(A) (2) | - 0.1 | -0.3 | - 0.8 | - 0.8 | - 0.5 | - 0.1 |

| | | | | | | |
|---|---|---|---|---|---|---|
| (1) différence entre pneu de l'invention et pneu témoin, à l'entrée de l'aire de contact ; (2) différence entre pneu de l'invention et pneu témoin, à la sortie de l'aire de contact. | | | | | | |

## Revendications

1. Pneumatique radial (1) pour véhicule automobile, comportant :
o un sommet (2) comprenant une bande de roulement (3) pourvue d'au moins une partie (3a) radialement externe destinée à entrer au contact de la route ;
o deux bourrelets (4), deux flancs (5) reliant les bourrelets (4) à la bande de roulement (3), une armature de carcasse (6) passant dans les deux flancs (5) et ancrée dans les bourrelets (4) ;
o le sommet (2) étant renforcé par une armature de sommet ou ceinture (7) disposée circonférentiellement entre l'armature de carcasse (6) et la bande de roulement (3) ;
o une couche élastomère radialement interne (3b, 8) dite « sous-couche », non destinée à entrer au contact avec la route, de formulation différente de la formulation de la couche élastomère radialement externe (3a), cette sous-couche étant disposée entre la couche radialement externe (3a) de la bande de roulement (3) et la ceinture (7), et comportant au moins un élastomère diénique et, à titre de charge haute densité, des particules dont la masse volumique est supérieure à 4 g/cm³,
**caractérisé en ce que** ces particules sont sous forme de poudre et leur taux est supérieur à 50 pce.

2. Pneumatique selon la revendication 1, dans lequel l'élastomère diénique est choisi dans le groupe constitué par le caoutchouc naturel, les polyisoprènes de synthèse, les polybutadiènes, les copolymères de butadiène, les copolymères d'isoprène et les mélanges de ces élastomères.

3. Pneumatique selon la revendication 2, dans lequel la sous-couche comporte, à titre d'élastomère diénique, au moins 40 pce de caoutchouc naturel ou polyisoprène de synthèse.

4. Pneumatique selon la revendication 3, dans lequel le caoutchouc naturel ou polyisoprène de synthèse est utilisé en mélange avec un second élastomère diénique de préférence choisi dans le groupe constitué par les polybutadiènes, les copolymères de butadiène et les mélanges de ces élastomères.

5. Pneumatique selon la revendication 4, dans lequel le taux de caoutchouc naturel ou polyisoprène de synthèse est compris dans un domaine de 40 à 80 pce et le taux de second élastomère diénique est compris dans un domaine de 20 à 60 pce.

6. Pneumatique selon l'une quelconque des revendications 1 à 5, dans lequel le taux de particules haute densité est compris entre 50 et 600 pce.

7. Pneumatique selon l'une quelconque des revendications 1 à 6, dans lequel la masse volumique des particules est supérieure à 4,5 g/cm³, de préférence supérieure à 5,0 g/cm³.

8. Pneumatique selon l'une quelconque des revendications 1 à 7, dans lequel les particules sont des microparticules.

9. Pneumatique selon l'une quelconque des revendications 1 à 8, dans lequel les particules sont des particules de métal ou d'un dérivé de métal, le métal étant préférentiellement choisi dans le groupe constitué par le Fer, le Cuivre, l'Etain, le Zinc, le Tungstène, le Bismuth, le Cérium, le Néodyme et les mélanges de ces métaux.

10. Pneumatique selon la revendication 9, dans lequel les particules sont des particules d'oxyde métallique, l'oxyde métallique étant choisi préférentiellement parmi Fe₂O₃, ZnO, CuO, SnO₂, WO₃, CeO₂, Nd₂O₃, Bi₂O₃ et les mélanges de tels oxydes.

11. Pneumatique selon l'une quelconque des revendications 1 à 10, dans lequel la sous-couche comporte en outre une charge renforçante, à un taux préférentiellement compris entre 0 et 100 pce.

12. Pneumatique selon l'une quelconque des revendications 1 à 11, dans lequel la sous-couche présente, à l'état vulcanisé, une masse volumique qui est supérieure à 1,4 g/cm³, de préférence comprise entre 1,5 et 3,0 g/cm³.

13. Pneumatique selon l'une quelconque des revendications 1 à 12, dans lequel la sous-couche constitue la base (3b) d'une bande de roulement (3) à structure cap-base.

14. Pneumatique selon l'une quelconque des revendications 1 à 12, dans lequel la sous-couche (8) est externe à la bande de roulement (3), disposée entre la bande de roulement (3) et la ceinture (7).

## Patentansprüche

1. Radialreifen (1) für ein Kraftfahrzeug, der aufweist:
o einen Scheitel (2), der einen mit mindestens einem radial äußeren Teil (3a), der dazu bestimmt ist, mit der Straße in Kontakt zu kommen, versehenen Laufstreifen (3) enthält;
o zwei Wülste (4), zwei Flanken (5), die die Wülste (4) mit dem Laufstreifen (3) verbinden, eine Karkassenbewehrung (6), die durch die zwei Flanken (5) geht und in den Wülsten (4) verankert ist;
o wobei der Scheitel (2) durch eine Scheitelbewehrung oder Gürtel (7) verstärkt ist, der in Umfangsrichtung zwischen der Karkassenbewehrung (6) und dem Laufstreifen (3) angeordnet ist;
o eine "Unterschicht" genannte, radial innere Elastomerschicht (3b, 8), die nicht dazu bestimmt ist, mit der Straße in Kontakt zu kommen, mit einer anderen Formel als die Formel der radial äußeren Elastomerschicht (3a), wobei diese Unterschicht zwischen der radial äußeren Schicht (3a) des Laufstreifens (3) und dem Gürtel (7) angeordnet ist und mindestens ein Dienelastomer und als hochdichten Füllstoff Partikel enthält, deren Dichte höher als 4 g/cm³ ist,
**dadurch gekennzeichnet, dass** diese Partikel pulverförmig sind und ihr Anteil höher als 50 phr ist.

2. Reifen nach Anspruch 1, wobei das Dienelastomer aus der Gruppe ausgewählt wird, die aus natürlichem Kautschuk, den synthetischen Polyisoprenen, den Polybutadienen, den Butadien-Copolymeren, den Isopren-Copolymeren und den Mischungen dieser Elastomere besteht.

3. Reifen nach Anspruch 2, wobei die Unterschicht als Dienelastomer mindestens 40 phr natürlicher Kautschuk oder synthetisches Polyisopren enthält.

4. Reifen nach Anspruch 3, wobei der natürliche Kautschuk oder das synthetische Polyisopren in einer Mischung mit einem zweiten Dienelastomer verwendet wird, das vorzugsweise aus der Gruppe ausgewählt wird, die aus den Polybutadienen, den Butadien-Copolymeren und den Mischungen dieser Elastomere besteht.

5. Reifen nach Anspruch 4, wobei der Anteil an natürlichem Kautschuk oder synthetischem Polyisopren in einem Bereich von 40 bis 80 phr und der Anteil eines zweiten Dienelastomers in einem Bereich zwischen 20 und 60 phr liegt.

6. Reifen nach einem der Ansprüche 1 bis 5, wobei der Anteil an hochdichten Partikeln zwischen 50 und 600 phr liegt.

7. Reifen nach einem der Ansprüche 1 bis 6, wobei die Dichte der Partikel höher als 4,5 g/cm³, vorzugsweise höher als 5,0 g/cm³ ist.

8. Reifen nach einem der Ansprüche 1 bis 7, wobei die Partikel Mikropartikel sind.

9. Reifen nach einem der Ansprüche 1 bis 8, wobei die Partikel Partikel aus Metall oder einem Metallderivat sind, wobei das Metall vorzugsweise aus der Gruppe ausgewählt wird, die aus Eisen, Kupfer, Zinn, Zink, Wolfram, Wismut, Cerium, Neodym und den Mischungen dieser Metalle besteht.

10. Reifen nach Anspruch 9, wobei die Partikel Metalloxidpartikel sind, wobei das Metalloxid vorzugsweise ausgewählt wird aus Fe₂O₃, ZnO, CuO, SnO₂, WO₃, CeO₂, Nd₂O₃, Bi₂O₃ und den Mischungen solcher Oxide.

11. Reifen nach einem der Ansprüche 1 bis 10, wobei die Unterschicht außerdem einen Verstärkungsfüllstoff in einem Anteil aufweist, der vorzugsweise zwischen 0 und 100 phr liegt.

12. Reifen nach einem der Ansprüche 1 bis 11, wobei die Unterschicht im vulkanisierten Zustand eine Dichte aufweist, die höher als 1,4 g/cm³ ist, vorzugsweise zwischen 1,5 und 3,0 g/cm³ liegt.

13. Reifen nach einem der Ansprüche 1 bis 12, wobei die Unterschicht die Basis (3b) eines Laufstreifens (3) mit Cap/Base-Struktur ist.

14. Reifen nach einem der Ansprüche 1 bis 12, wobei die Unterschicht (8) außerhalb des Laufstreifens (3) zwischen dem Laufstreifen (3) und dem Gürtel (7) angeordnet ist.

## Claims

1. Radial tyre (1) for motor vehicle, comprising:
o a crown (2) comprising a tread (3) provided with at least one radially outer part (3a) intended to come into contact with the road;
o two beads (4), two sidewalls (5) connecting the beads (4) to the tread (3), a carcass reinforcement (6) passing into the two sidewalls (5) and anchored in the beads (4);
o the crown (2) being reinforced by a crown reinforcement or belt (7) placed circumferentially between the carcass reinforcement (6) and the tread (3);
o a radially inner elastomer layer (3b, 8) known as a "sublayer", not intended to come into contact with the road, having a formulation different from the formulation of the radially outer elastomer layer (3a), this sublayer being placed between the radially outer layer (3a) of the tread (3) and the belt (7), and comprising at least one diene elastomer and, as a high-density filler, particles having a density of greater than 4 g/cm³,
**characterized in that** these particles are in the form of powder and their content is more than 50 phr.

2. Tyre according to Claim 1, in which the diene elastomer is chosen from the group consisting of natural rubber, synthetic polyisoprenes, polybutadienes, butadiene copolymers, isoprene copolymers and blends of these elastomers.

3. Tyre according to Claim 2, in which the sublayer comprises, as diene elastomer, at least 40 phr of natural rubber or synthetic polyisoprene.

4. Tyre according to Claim 3, in which the natural rubber or synthetic polyisoprene is used as a blend with a second diene elastomer, preferably chosen from the group consisting of polybutadienes, butadiene copolymers and blends of these elastomers.

5. Tyre according to Claim 4, in which the content of natural rubber or synthetic polyisoprene is within a range from 40 to 80 phr and the content of second diene elastomer is within a range from 20 to 60 phr.

6. Tyre according to any one of Claims 1 to 5, in which the content of high-density particles is between 50 and 600 phr.

7. Tyre according to any one of Claims 1 to 6, in which the density of the particles is greater than 4.5 g/cm³, preferably greater than 5.0 g/cm³.

8. Tyre according to any one of Claims 1 to 7, in which the particles are microparticles.

9. Tyre according to any one of Claims 1 to 8, in which the particles are particles of metal or of a metal derivative, the metal being chosen preferably from the group consisting of iron, copper, tin, zinc, tungsten, bismuth, cerium, neodymium and mixtures of these metals.

10. Tyre according to Claim 9, in which the particles are particles of metal oxide, the metal oxide being chosen preferably from Fe₂O₃, ZnO, CuO, SnO₂, WO₃, CeO₂, Nd₂O₃, Bi₂O₃ and mixtures of such oxides.

11. Tyre according to any one of Claims 1 to 10, in which the sublayer also comprises a reinforcing filler, at a content preferably between 0 and 100 phr.

12. Tyre according to any one of Claims 1 to 11, in which the sublayer has, in the vulcanized state, a density that is greater than 1.4 g/cm³, preferably between 1.5 and 3.0 g/cm³.

13. Tyre according to any one of Claims 1 to 12, in which the sublayer constitutes the base (3b) of a tread (3) of cap-base construction.

14. Tyre according to any one of Claims 1 to 12, in which the sublayer (8) is external to the tread (3), placed between the tread (3) and the belt (7).
